(19) **Europäisches Patentamt European Patent Office Office européen des brevets**

(11) **EP 2 757 711 B1**

(12) **EUROPEAN PATENT SPECIFICATION**

(45) Date of publication and mention
of the grant of the patent:
**26.06.2019 Bulletin 2019/26**

(51) Int Cl.:
***H04B 17/15*** (2015.01)

(21) Application number: **11864789.0**

(22) Date of filing: **19.09.2011**

(86) International application number:
**PCT/CN2011/079818**

(87) International publication number:
**WO 2012/149747 (08.11.2012 Gazette 2012/45)**

(54) **COMMUNICATION DEVICE AND METHOD FOR MONITORING PERFORMANCE THEREOF**

KOMMUNIKATIONSVORRICHTUNG UND LEISTUNGSÜBERWACHUNGSVERFAHREN DAFÜR

DISPOSITIF DE COMMUNICATION ET PROCÉDÉ DE SURVEILLANCE DES PERFORMANCES DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.07.2014 Bulletin 2014/30**

(73) Proprietor: **Huawei Technologies Co., Ltd.
Longgang District
Shenzhen, Guangdong 518129 (CN)**

(72) Inventors:
• **YANG, Jianjun**
 **Shenzhen, Guangdong 518129 (CN)**
• **TIAN, Zhihai**
 **Shenzhen, Guangdong 518129 (CN)**

• **JIANG, Lihong**
 **Shenzhen, Guangdong 518129 (CN)**
• **MAO, Mengda**
 **Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**EP-A1- 2 214 390     WO-A1-2009/056160
WO-A2-2008/102313    CN-A- 101 222 366
CN-A- 101 299 685**

**Description**

**FIELD OF THE INVENTION**

The present invention relates to communications technologies, and in particular to a communications device and a method for monitoring performance thereof.

**BACKGROUND OF THE INVENTION**

Currently, when whether a communications device is abnormal is judged, the following method is generally used: Configure a spectrum analyzer or a signal analyzer outside the communications device, and judge whether the communications device is abnormal by using an output signal of the communications device, where the output signal is collected by the spectrum analyzer or the signal analyzer. However, an external dedicated monitoring device has multiple problems, for example, dedicated devices need to be purchased, but these devices are generally expensive, which causes an increased cost; a service needs to be interrupted during monitoring, which causes a network to be completely unavailable; and only a problem of the communications device as a whole can be found, and a specific problem about the inside of the communications device cannot be located.

WO 2008/102313 A2 discloses: an electronic device comprising a transceiver stage for communicating signals between the electronic device and a further device; and a baseband processor arrangement implementing a built-in self test arrangement for testing the transceiver channels of the electronic device. The built-in self test arrangement further comprises a plurality of records, each record comprising predetermined response deviations to different test signals caused by a parametric fault; and means for selecting those records from the plurality of records for which the predetermined response deviation corresponds to the deviation of the received response.

**SUMMARY OF THE INVENTION**

The present invention provides a communications device and a method as defined in the appended independent claims for monitoring performance thereof to resolve a problem that is caused by using an external dedicated device to perform monitoring in the prior art.

It can be seen from the above technical solutions that in the present invention, monitoring of a communications device is implemented by itself without an external dedicated device by arranging a collection unit and a monitoring unit in the communications device, thereby avoiding a problem caused by the external dedicated device.

**BRIEF DESCRIPTION OF THE DRAWINGS**

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.

FIG. 1 is a schematic structural diagram of a communications device according to an embodiment of the present invention;
FIG. 2 is a schematic structural diagram of a communications device according to another embodiment of the present invention; and
FIG. 3 is a schematic flowchart of a method for monitoring performance of a communications device according to an embodiment of the present invention.

**DETAILED DESCRIPTION OF THE EMBODIMENTS**

To make the objectives, technical solutions, and advantages of the embodiments of present invention more comprehensible, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

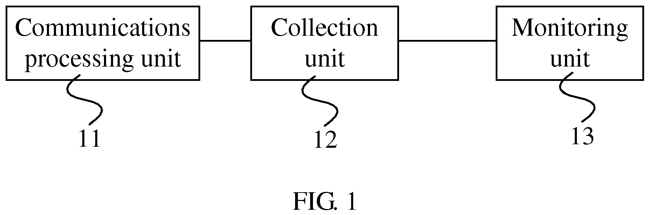

FIG. 1 is a schematic structural diagram of a communications device according to an embodiment of the present invention, including a communications processing unit 11, a collection unit 12, and a monitoring unit 13; the communications processing unit 11 is configured to implement a function of the communications device; the collection unit 12 is configured to collect a signal output by the communications processing unit 11; and the monitoring unit 13 is configured to monitor the signal collected by the collection unit 12 to locate a fault.

The communications processing unit 11 may be a unit, such as at least one of a baseband processing unit (Base Band Unit, BBU), an interface processing unit, a digital processing unit, and an analog processing unit, which is commonly included in the communications device.

The number of collection units 12 is configurable, one or more collection units 12 may exist, and each collection unit 12 corresponds to one communications processing unit.

The monitoring unit 13 is connected to the collection unit 12 to analyze a signal collected by the collection unit 12 to locate the fault. For example, it may be that the monitoring unit 13 compares signals collected by the collection unit 12 to locate the fault. Alternatively, it may also be that the monitoring unit 13 compares the signal collected by the collection unit 12 with a standard signal to locate the fault.

The communications device may specifically be a base station.

In this embodiment, monitoring of a communications device is implemented by itself without an external dedicated device by arranging a collection unit and a monitoring unit in the communications device, thereby avoiding a problem caused by the external dedicated device.

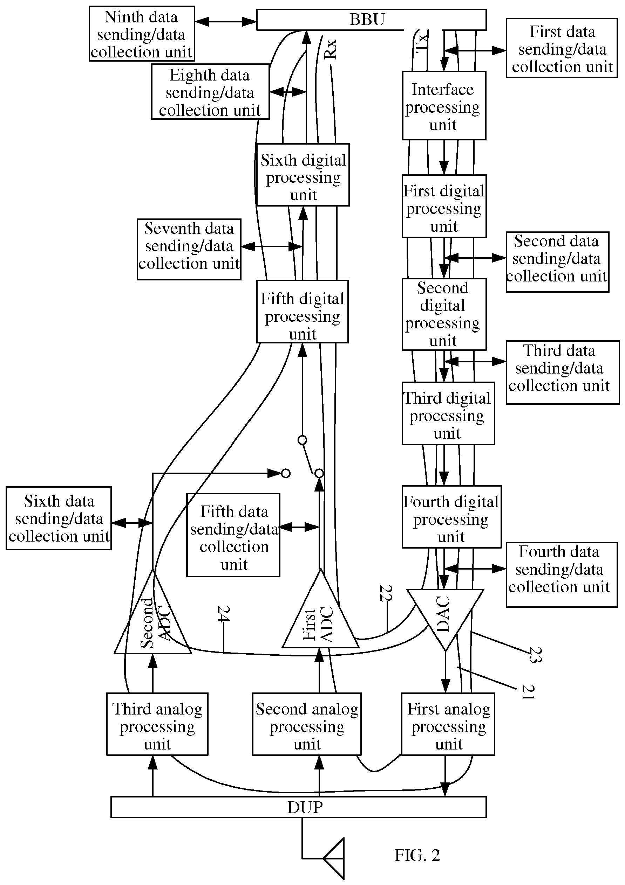

FIG. 2 is a schematic structural diagram of a communications device according to another embodiment of the present invention. In this embodiment, a communications processing unit may include any one of or a combination of at least two of a BBU, an interface processing unit, a digital processing unit, a digital-to-analog converter (Digital Analog Converter, DAC), an analog processing unit, a duplexer (Duplexer, DUP), and an analog-to-digital converter (Analog Digital Converter, ADC).

It should be understood that for different communications devices, internal compositions thereof are different. Therefore, corresponding communications processing units are also different. This embodiment is only an example and is not limited to the above units.

In addition, multiple digital processing units and analog processing units may be included. For example, in FIG. 2, the digital processing units are represented by using a first digital processing unit, a second digital processing unit, and the like, and the analog processing units are represented by using a first analog processing unit, a second analog processing unit, and the like. In addition, different digital processing units may implement a same function, and may also implement different functions. For example, both the first digital processing unit and the second digital processing unit may be sampling rate conversion (Sampling Rate Conversion, SRC) devices, or are crest factor reduction (Crest Factor Reduction, CFR) devices. Alternatively, the first digital processing unit is an SRC device and the second digital processing unit is a CFR device.

This embodiment may support online testing. In this case, signals output by communication nodes can be collected by using a collection unit. This embodiment may also support static testing, which is not part of the invention but only as an example for further understanding the invention. In this case, a signal may be actively generated, that is, a unit that generates the signal exists. In FIG. 2, a case where the unit that generates the signal is integrated with a unit that collects the signal is taken as an example, that is, a data sending and data collection unit (represented by a data sending/data collection unit in FIG. 2). It should be understood that the unit that collects the signal and the unit that generates the signal can also be separately arranged. In addition, the number of data sending and data collection units can be set according to actual needs.

In this embodiment, the data sending and data collection unit is arranged in the communications device to implement monitoring. Detailed monitoring methods may be as follows:
Manner 1: Different node data is mutually compared.

Assume that a signal collected by a first data sending and data collection unit is a first signal, and a signal collected by a second data sending and data collection unit is a second signal. Afterwards, a monitoring unit receives the first signal and the second signal and judges whether a fault occurs by comparing the first signal and the second signal. It may be that when a difference between the first signal and the second signal is within a preset range, it indicates that no fault occurs. Otherwise, a fault occurs.

The preset range may be a fixed value, and may also be processed in differentiated manner according to an intermediate node. For example, a same value may be firstly set, and a difference between signals from any location uses the set value as a basis for judging whether a fault occurs. It may also be that different values are set according to a node corresponding to a signal. For example, a node between the second data sending and data collection unit and a third data sending and data collection unit is a second digital processing unit, and a node between a seventh data sending and data collection unit and an eighth data sending and data collection unit is a sixth digital processing unit. A first value can be set corresponding to the second digital processing unit, and a second value is set corresponding to the sixth digital processing unit. Afterwards, a difference between a signal collected by the second data sending and data collection unit and a signal collected by the third data sending and data collection unit is compared with the first value, and a difference between a signal collected by the seventh data sending and data collection unit and a signal collected by the eighth data sending and data collection unit is compared with the second value.

Particularly, this manner may implement a test of a transmission modulation characteristic. Modulation characteristic herein means a performance of a modulation scheme, which, for example, can be indicated by an EVM (Error Vector Magnitude). The test of the transmission modulation characteristic may specifically include: a test of a relative transmission modulation characteristic and a test of an absolute transmission modulation characteristic. When the relative transmission modulation characteristic is tested, the collection unit includes a first collection unit and a second collection unit, where a signal collected by the first collection unit is a first signal, and a signal collected by the second collection unit is a second signal; and the monitoring unit is specifically configured to calculate the first signal and the second signal to obtain the relative transmission modulation characteristic, and locate a fault according to the relative transmission modulation characteristic. When the absolute transmission modulation characteristic is tested, the collection unit includes a first collection unit and a second collection unit, where a signal collected by the first collection unit is a first signal, and a signal collected by the second collection unit is a second signal; and the first signal is a fixed value, the second signal is a signal collected from a fixed measurement point, and the monitoring unit is specifically configured to demodulate the fixed first signal and the second signal collected from the fixed measurement point, obtain the absolute transmission modulation characteristic according to the first signal and the demodulated second signal, and locate a fault according to the absolute transmission modulation characteristic.

Regarding the test of the relative transmission modulation characteristic, specifically, when the relative transmission modulation characteristic is tested, any one of the nodes serves as a reference point, and the relative transmission modulation characteristic is obtained by comparing a modulation characteristic of another node with that of the reference node. For example, the first data sending and data collection unit serves as the reference point, and the second data sending and data collection unit serves as a measurement point that is compared with the reference point. The monitoring unit may acquire first signals $I_{ref}$ and $Q_{ref}$ collected by the first data sending and data collection unit, acquire second signals $I_{meas}$ and $Q_{meas}$ collected by the second data sending and data collection unit, and performs similarity coefficient calculation for the signals. For example, the relative transmission modulation characteristic is obtained according to

$$EVM = \sqrt{\frac{\sum(|I_{meas} - I_{ref}|^2 + |Q_{meas} - Q_{ref}|^2)}{\sum|I_{ref}^2 + Q_{ref}^2|}}$$    Further, whether a fault occurs may be determined according to different requirements of different systems on the relative transmission modulation characteristic. If EVM (Error Vector Magnitude) of a system is 5%, when EVM is greater than 5%, it indicates that a fault occurs. Otherwise, no fault occurs.

In addition, this manner may further implement a test of an absolute modulation characteristic. Compared with a test of a relative modulation characteristic, during the test of the absolute modulation characteristic, a reference signal (that is, the first signals $I_{ref}$ and $Q_{ref}$) is fixed, a measurement point corresponding to a reference point is fixed, but a measurement signal (that is, the second signals $I_{meas}$ and $Q_{meas}$) collected by the measurement point is not fixed; and when the relative modulation characteristic is tested, a reference point and a measurement point are optional, and a corresponding reference signal and a corresponding measurement signal are also not fixed. Specifically, regarding the test of the absolute modulation characteristic, assume that a signal that is output by the BBU and is collected by a ninth data sending and data collection unit at a moment serves as the reference signal, and an output point of the first digital processing unit serves as the measurement point. Afterwards, when the absolute modulation characteristic is tested, related processing such as demodulation may be performed on the second signals collected by the second data sending and data collection unit at different moments, and then the second signals after the processing such as demodulation are obtained. Further, values of the absolute transmission modulation characteristic at different moments can be obtained according to the EVM calculation formula, and whether a fault occurs at a corresponding moment is determined according to the values of the absolute transmission modulation characteristic. The absolute transmission modulation characteristic may also be called a transmission modulation characteristic that is obtained by referring to a communications system standard. A fault may be located according to the absolute transmission modulation characteristic (or the transmission modulation characteristic that is obtained by referring to the communications system standard), and a protocol has different requirements for the modulation characteristic in different modulation manners. For example, 64QAM requires that EVM is 3% or the like. For example, in the case of 64QAM, if a value of EVM, which is obtained according to the EVM calculation formula, the fixed first signal value, and the non-fixed second signal value that is obtained from the fixed measurement point, is greater than 3%, it indicates that a fault occurs. Otherwise, no fault occurs.

The difference between the absolute transmission modulation characteristic and the relative transmission modulation characteristic is as follows: The absolute transmission modulation characteristic is a modulation characteristic that demodulates a signal into a symbol-level signal or a bit-level signal and is obtained by referring to a protocol standard, and the relative transmission modulation characteristic obtains a modulated composite signal envelop. When whether a fault occurs is judged, different standards need to be selected according to a system requirement in combination with the difference between the two manners to perform judgment. The demodulation is generic demodulation, for example,

**EP 2 757 711 B1**

in a spread spectrum scenario, the demodulation further includes processing such as despreading. Relatively, the modulation is also generic modulation and further includes processing such as spreading in a spread spectrum scenario.

Manner 2: Data of a node is compared with standard data.

Specifically, a signal collected by a data sending and data collection unit is compared with the standard data, where the standard data may be preconfigured in the monitoring unit. For example, the monitoring unit acquires the first signals collected by the first data sending and data collection unit, which are then compared with configured standard data that corresponds to the first signals. If a difference between the two is within the preset range, it indicates that the communications device is normal. Otherwise, a fault occurs.

Particularly, this manner may implement a test of a transmission spectrum characteristic. The spectrum characteristic, for example, can be indicated by an unwanted emissions or an operating band unwanted emissions mask. It may be that the collection unit is specifically configured to collect signals within different frequency ranges, and the monitoring unit is specifically configured to perform FFT analysis on the signals within the different frequency ranges to obtain the transmission spectrum characteristic and locate a fault according to a comparison between the transmission spectrum characteristic and preconfigured thresholds that correspond to the different frequency ranges. For example, signals output by different nodes are collected by using different data sending and data collection units, where the signals output by the different nodes may be signals within different frequency ranges. Fast Fourier transformation (Fast Fourier Transform, FFT) analysis may be performed according to the signals within the different frequency ranges to obtain the transmission spectrum characteristic. The different frequency ranges may include at least one of the following items: an adjacent channel, a remote channel, and a remote end. Take a Universal Mobile Telecommunications System (Universal Mobile Telecommunications System, UMTS) as an example. A frequency range of the adjacent channel indicates a range in which the center of the adjacent channel is 5 MHz from a signal center to be measured, and the bandwidth of the adjacent channel is 3.84 MHz. A frequency range of the remote channel indicates a range in which the center of the remote channel is 10 MHz from the signal center to be measured, and the bandwidth of the remote channel is 3.84 MHz. A frequency range of the remote end indicates a range in which the center of the remote end is greater than 10 MHz from the signal center to be measured, and the range may further be divided according to different systems. A threshold of transmission spectrum power can be set within different frequency ranges. If the power exceeds the threshold, it is considered that a fault occurs.

Manner 3: Mutual loopback nodes are compared.

Whether a loop is faulty can be judged by using this manner. For example, referring to FIG. 2, if whether a fault occurs on a loop 21 needs to be tested, a first analog processing unit and a second analog processing unit of a node can be directly connected, and if whether a fault occurs on a loop 23 needs to be tested, the first analog processing unit and a third analog processing unit of the node can be directly connected.

In this case, this embodiment may further include a selection unit, and the selection unit is configured to directly connect a communications processing unit that corresponds to a loop to be monitored to implement the loop; and may specifically include: receiving a control command of the monitoring unit, and directly connecting corresponding nodes according to the control command. For example, the selection unit is a single-pole multi-throw switch. One side of each single-pole multi-throw switch has one static contact, which is connected to an output end of a node, the other side has multiple static contacts, and each of the multiple static contacts is connected to an input end of another node. A dynamic contact of the single-pole multi-throw switch selects one of the multiple static contacts and connects the selected static contact and the one static contact on the other side according to control of a control module. Specifically, one static contact (called a first static contact) on one side of a first single-pole multi-throw switch is connected to an output end of the first analog processing unit, and the other side of the first single-pole multi-throw switch has multiple static contacts, which are connected to input ends of other nodes. Assume that a static contact that is connected to an input end of the second analog processing unit is a second static contact. When the loop to be tested is the loop 21, the monitoring unit may deliver a control command to the first single-pole multi-throw switch, where the control command carries information about second static contact connection. Then, a dynamic contact of the first single-pole multi-throw switch is connected to the second static contact. In this case, the first static contact and the second static contact are connected, that is, the first analog processing unit and the second analog processing unit are directly connected. Certainly, when the loop does not need to be tested, the dynamic contact of the single-pole multi-throw switch remains in disconnected state.

Certainly, a range of the loop may further be reduced. For example, a loop 22 may further be tested, and in this case, the selection unit directly connects a DAC and a first ADC. If a loop 24 is further tested, the selection unit directly connects the DAC and a second ADC. In this case, the direct connection manner may specifically be a manner in which the selection unit directly connects the first analog processing unit and the second analog processing unit.

In addition, the various tests may support online testing, and may also support static testing. The online testing indicates a test that is performed when a service is performed. For example, when the communications device performs a service properly, a test is performed by using a signal collected by a data sending and data collection unit. The static testing indicates a test that is performed when the communications device performs no service, and in this case, the data sending and data collection unit may generate a signal.

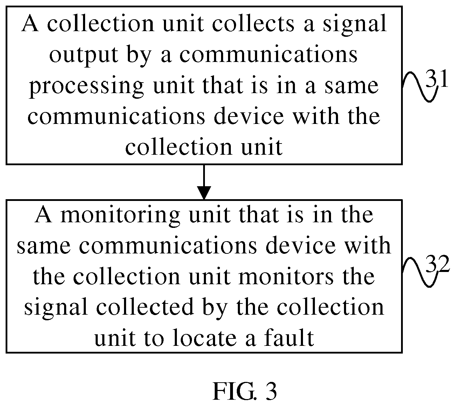

FIG. 3 is a schematic flowchart of a method for monitoring performance of a communications device according to an embodiment of the present invention. The method may be a method that is performed when the communications device performs monitoring. The method includes:

Step 31: A collection unit collects a signal output by a communications processing unit that is in the same communications device with the collection unit.

This embodiment may be used for online testing, and may also be used for static testing, which is not part of the invention but only as an example for further understanding the invention.

Regarding the online testing, the collection unit collects a signal that is output when the communications processing unit performs a service.

Regarding the static testing, this embodiment may further include the following:

A generating unit generates a signal and sends it to the communications processing unit; and the generating unit is also in the communications device, and the generating unit and the collection unit may be arranged together, for example, the preceding data sending and data collection unit, and certainly, may also be arranged in separate devices. The communications device may specifically be a base station.

The communications processing unit processes and outputs the signal generated by the generating unit. A specific processing function of the communications processing unit may perform processing, such as corresponding digital processing, analog processing, DAC, and ADC conversion, according to a function owned by the communications processing unit itself.

In this case, the signal collected by the collection unit is the signal that is generated by the generating unit and output by the communications processing unit.

Step 32: A monitoring unit that is in the same communications device with the collection unit monitors the signal collected by the collection unit to locate a fault.

During fault monitoring, it may be that two collected signals are compared; it may also be that one collected signal is compared with a standard signal; and it may also be that a loop is formed and the loop is monitored.

Specifically, it may be that at least two collection units exist, and the monitoring unit compares signals collected by the at least two collection units to locate the fault.

Specifically, it may be that a test of a relative transmission modulation characteristic is performed. In this case, the collection unit includes a first collection unit and a second collection unit, where a signal collected by the first collection unit is a first signal, and a signal collected by the second collection unit is a second signal. The comparing signals collected by the at least two collection units to locate the fault includes the following:

The monitoring unit calculates the first signal and the second signal to obtain the relative transmission modulation characteristic, and locate the fault according to the relative transmission 9 modulation characteristic.

Alternatively, a test of an absolute transmission modulation characteristic is performed. In this case, the collection unit includes a first collection unit and a second collection unit, where a signal collected by the first collection unit is a first signal, a signal collected by the second collection unit is a second signal, the first signal is a fixed value, and the second signal is a signal collected from a fixed measurement point. The comparing signals collected by the at least two collection units to locate the fault includes the following:

The monitoring unit demodulates the fixed first signal and the second signal collected from the fixed measurement point, obtains the absolute transmission modulation characteristic according to the first signal and the demodulated second signal, and locates the fault according to the absolute transmission modulation characteristic.

Alternatively, at least one collection unit exists, and the monitoring unit compares signals collected by the collection unit with a preconfigured standard signal to locate a fault.

Specifically, it may be that a test of a transmission spectrum characteristic is performed. In this case, the collected signals are signals that are within different frequency ranges and collected by the collection unit. The comparing signals collected by the collection unit with a preconfigured standard signal to locate a fault includes the following:

The monitoring unit performs FFT analysis on the signals within the different frequency ranges to obtain the transmission spectrum characteristic, and locates the fault according to a comparison between the transmission spectrum characteristic and preconfigured thresholds that correspond to the different frequency ranges.

Alternatively, a selection unit in the communications device directly connects a communications processing unit that corresponds to the loop to be monitored to implement the loop, and the monitoring unit collects a signal at an endpoint of the loop to monitor the loop for detecting a fault of the loop.

For the specific content about the monitoring, reference may be made to a related description in the communications device.

In this embodiment, monitoring of a communications device is implemented by itself without an external dedicated device by arranging a collection unit and a monitoring unit in the communications device, thereby avoiding a problem caused by the external dedicated device. This embodiment may apply to different monitoring scenarios.

It should be understood that mutual reference may be made to related features in the methods and that in the communications device.

Persons of ordinary skill in the art may understand that all or part of the steps of the method specified in the embodiments may be implemented by a program instructing relevant hardware. The program may be stored in a computer readable storage medium. When the program is run, the steps of the method specified in the foregoing embodiments are performed. The storage medium may be any medium capable of storing program codes, such as ROM, RAM, magnetic disk, or optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solution described in the foregoing embodiments without departing from the scope of the claims.

**Claims**

1.  A communications device, adapted for performing online testing, which indicates a test is performed when a service is performed, comprising:

    a communications processing unit (11), configured to perform a function of the communications device;
    a collection unit (12), configured to collect a signal output by the communications processing unit (11) when the communication processing unit performs a service; and
    a monitoring unit (13), configured to monitor the signal collected by the collection unit (12) to locate a fault;
    wherein the communication device comprises at least two collection units and at least two communications processing units, wherein a first collection unit corresponds to a first communications processing unit, and a second collection unit corresponds to a second communications processing unit, and the monitoring unit (13) is configured to compare signals collected by the at least two collection units to locate the fault; and
    wherein a signal collected by the first collection unit is a first signal, and a signal collected by the second collection unit is a second signal, the monitoring unit (13) is configured to calculate the first signal and the second signal to obtain a relative transmission modulation characteristic, and locate the fault according to the relative transmission modulation characteristic;
    wherein the communication device further comprises:
    a selection unit, configured to directly connect the at least two communications processing units that correspond to a loop to be monitored to implement the loop; wherein the selection unit is further configured to receive a control command of the monitoring unit (13) and directly connect corresponding communication processing units according to the control command.

2.  The communications device according to claim 1, wherein the selection unit is a single-pole multi-throw switch, one side of each single-pole multi-throw switch has one static contact, which is connected to an output end of a communication node, the other side has multiple static contacts, and each of the multiple static contacts is connected to an input end of another communication node, wherein each communication node corresponds to each of the communication processing units, respectively.

3.  The communications device according to claim 2, wherein a dynamic contact of the single-pole multi-throw switch is configured to select one of the multiple static contacts and to connect the selected static contact and the one static contact on the other side according to the control command of the monitoring unit (13).

4.  A method for monitoring performance of a communications device, adapted for performing online testing, which indicates a test is performed when a service is performed, comprising:

    collecting, by a collection unit, a signal output by a communications processing unit that is in the same communications device with the collection unit (31) when the communication processing unit performs a service; and
    monitoring, by a monitoring unit that is in the same communications device with the collection unit, the signal collected by the collection unit to locate a fault (32);
    wherein the communication device comprises at least two collection units and at least two communications processing units, wherein a first collection unit corresponds to a first communications processing unit, and a second collection unit corresponds to a second communications processing unit, and the monitoring the signal collected by the collection unit to locate a fault comprises: comparing signals collected by the at least two collection units to locate the fault; and
    wherein a signal collected by the first collection unit is a first signal, a signal collected by the second collection unit is a second signal, and the comparing signals collected by the at least two collection units to locate the fault comprises:

calculating, by the monitoring unit, the first signal and the second signal to obtain a relative transmission modulation characteristic, and locate the fault according to the relative transmission modulation characteristic;

the method further comprising directly connecting, by a selection unit comprised in the communications device, the at least two communications processing units that correspond to a loop to be monitored to implement the loop; and further comprising receiving, by the selection unit, a control command of the monitoring unit (13) and directly connecting the corresponding communication processing units according to the control command.

5. The method according to claim 4, wherein the selection unit is a single-pole multi-throw switch, one side of each single-pole multi-throw switch has one static contact, which is connected to an output end of a communication node, the other side has multiple static contacts, and each of the multiple static contacts is connected to an input end of another communication node, wherein each communication node corresponds to each of the communication processing units, respectively.

6. The method according to claim 5, wherein a dynamic contact of the single-pole multi-throw switch selects one of the multiple static contacts and connects the selected static contact and the one static contact on the other side according to the control command the monitoring unit (13).

**Patentansprüche**

1. Kommunikationsvorrichtung, geeignet für die Durchführung von Online-Prüfungen, welche anzeigt, dass eine Prüfung durchgeführt wird, wenn ein Dienst ausgeführt wird, Folgendes umfassend:

eine Kommunikationsverarbeitungseinheit (11), die dafür eingerichtet ist, eine Funktion der Kommunikationsvorrichtung auszuführen;
eine Erfassungseinheit (12), die dafür eingerichtet ist, eine Signalausgabe durch die Kommunikationsverarbeitungseinheit (11) zu erfassen, wenn die Kommunikationsverarbeitungseinheit einen Dienst ausführt; und
eine Überwachungseinheit (13), die dafür eingerichtet ist, das von der Erfassungseinheit (12) erfasste Signal zu überwachen, um einen Fehler zu lokalisieren;
wobei die Kommunikationsvorrichtung mindestens zwei Erfassungseinheiten und mindestens zwei Kommunikationsverarbeitungseinheiten umfasst, und wobei eine erste Erfassungseinheit einer ersten Kommunikationsverarbeitungseinheit entspricht und eine zweite Erfassungseinheit einer zweiten Kommunikationsverarbeitungseinheit entspricht, und wobei die Überwachungseinheit (13) dafür eingerichtet ist, Signale zu vergleichen, die von den mindestens zwei Erfassungseinheiten erfasst wurden, um den Fehler zu lokalisieren; und
wobei ein von der ersten Erfassungseinheit erfasstes Signal ein erstes Signal ist und ein von der zweiten Erfassungseinheit erfasstes Signal ein zweites Signal ist, wobei die Überwachungseinheit (13) dafür eingerichtet ist, das erste Signal und das zweite Signal zu berechnen, um eine relative Übertragungs-Modulationscharackteristik zu erlangen und den Fehler entsprechend der relativen Übertragungs-Modulationscharackteristik zu lokalisieren;
wobei die Kommunikationsvorrichtung ferner Folgendes umfasst:
eine Auswahleinheit, die dafür eingerichtet ist, die mindestens zwei Kommunikationsverarbeitungseinheiten, die einer zu überwachenden Schleife entsprechen, direkt zu verbinden, um die Schleife zu implementieren;
wobei die Auswahleinheit ferner dafür eingerichtet ist, einen Steuerbefehl der Überwachungseinheit (13) zu empfangen und entsprechende Kommunikationsverarbeitungseinheiten gemäß dem Steuerbefehl direkt zu verbinden.

2. Kommunikationsvorrichtung nach Anspruch 1, wobei es sich bei der Auswahleinheit um einen einpoligen Mehrwegeschalter handelt, wobei eine Seite eines jeden einpoligen Mehrwegeschalters einen statischen Kontakt aufweist, der an ein Ausgangsende eines Kommunikationsknotens angeschlossen ist, und wobei die andere Seite mehrere statische Kontakte aufweist, und wobei jeder der mehreren statischen Kontakte an ein Eingangsende eines anderen Kommunikationsknotens angeschlossen ist, wobei jeder Kommunikationsknoten jeweils jeder der Kommunikationsverarbeitungseinheiten entspricht.

**3.** Kommunikationsvorrichtung nach Anspruch 2, wobei ein dynamischer Kontakt des einpoligen Mehrwegeschalters dafür eingerichtet ist, einen der mehreren statischen Kontakte auszuwählen und den ausgewählten statischen Kontakt und den einen statischen Kontakt auf der anderen Seite gemäß dem Steuerbefehl der Überwachungseinheit (13) miteinander zu verbinden.

**4.** Verfahren zur Überwachung des Leistungsverhaltens einer Kommunikationsvorrichtung, geeignet für die Durchführung von Online-Prüfungen, welches anzeigt, dass eine Prüfung durchgeführt wird, wenn ein Dienst ausgeführt wird, Folgendes umfassend:

Erfassen, durch eine Erfassungseinheit, einer Signalausgabe durch eine Kommunikationsverarbeitungseinheit, die sich mit der Erfassungseinheit (31) in derselben Kommunikationsvorrichtung befindet, wenn die Kommunikationsverarbeitungseinheit einen Dienst ausführt; und

Überwachen, durch eine Überwachungseinheit, die sich mit der Erfassungseinheit in derselben Kommunikationsvorrichtung befindet, des Signals, das durch die Erfassungseinheit erfasst wird, um einen Fehler (32) zu lokalisieren;

wobei die Kommunikationsvorrichtung mindestens zwei Erfassungseinheiten und mindestens zwei Kommunikationsverarbeitungseinheiten umfasst, und wobei eine erste Erfassungseinheit einer ersten Kommunikationsverarbeitungseinheit entspricht und eine zweite Erfassungseinheit einer zweiten Kommunikationsverarbeitungseinheit entspricht, und wobei das Überwachen des von der Erfassungseinheit erfassten Signals zur Lokalisierung eines Fehlers Folgendes umfasst: Vergleichen der Signale, die von den mindestens zwei Erfassungseinheiten erfasst wurden, um den Fehler zu lokalisieren; und

wobei ein von der ersten Erfassungseinheit erfasstes Signal ein erstes Signal ist, ein von der zweiten Erfassungseinheit erfasstes Signal ein zweites Signal ist, und das Vergleichen der Signale, die von den mindestens zwei Erfassungseinheiten erfasst wurden, um den Fehler zu lokalisieren, Folgendes umfasst:

Berechnen, durch die Überwachungseinheit, des ersten Signals und des zweiten Signals, um eine relative Übertragungs-Modulationscharakteristik zu erlangen und den Fehler entsprechend der relativen Übertragungs-Modulationscharakteristik zu lokalisieren;

wobei das Verfahren ferner Folgendes umfasst: direktes Verbinden, durch eine in der Kommunikationsvorrichtung beinhaltete Auswahleinheit, der mindestens zwei Kommunikationsverarbeitungseinheiten, die einer zu überwachenden Schleife entsprechen, um die Schleife zu implementieren; und ferner Folgendes umfasst: das Empfangen, durch die Auswahleinheit, eines Steuerbefehls der Überwachungseinheit (13), und direktes Verbinden der entsprechenden Kommunikationsverarbeitungseinheiten gemäß dem Steuerbefehl.

**5.** Verfahren nach Anspruch 4, wobei es sich bei der Auswahleinheit um einen einpoligen Mehrwegeschalter handelt, wobei eine Seite eines jeden einpoligen Mehrwegeschalters einen statischen Kontakt aufweist, der an ein Ausgangsende eines Kommunikationsknotens angeschlossen ist, und wobei die andere Seite mehrere statische Kontakte aufweist, wobei jeder der mehreren statischen Kontakte an ein Eingangsende eines anderen Kommunikationsknotens angeschlossen ist, wobei jeder Kommunikationsknoten jeweils jeder der Kommunikationsverarbeitungseinheiten entspricht.

**6.** Verfahren nach Anspruch 5, wobei ein dynamischer Kontakt des einpoligen Mehrwegeschalters einen der mehreren statischen Kontakte auswählt und den ausgewählten statischen Kontakt und den einen statischen Kontakt auf der anderen Seite gemäß dem Steuerbefehl der Überwachungseinheit (13) miteinander verbindet.

## Revendications

**1.** Dispositif de communication, conçu pour exécuter un test en ligne, qui indique qu'un test est exécuté quand un service est exécuté, comprenant :

une unité de traitement de communication (11), configurée pour exécuter une fonction du dispositif de communication ;

une unité de collecte (12), configurée pour collecter un signal émis par l'unité de traitement de communication (11) quand l'unité de traitement de communication exécute un service ; et

une unité de surveillance (13), configurée pour surveiller le signal collecté par l'unité de collecte (12) pour localiser une anomalie ;

le dispositif de communication comprenant au moins deux unités de collecte et au moins deux unités de traitement de communication, une première unité de collecte correspondant à une première unité de traitement de communication, et une seconde unité de collecte correspondant à une seconde unité de traitement de communication, et l'unité de surveillance (13) étant configurée pour comparer des signaux collectés par les au moins deux unités de collecte pour localiser l'anomalie ; et

un signal collecté par la première unité de collecte étant un premier signal, et un signal collecté par la seconde unité de collecte étant un second signal, l'unité de surveillance (13) étant configurée pour calculer le premier signal et le second signal afin d'obtenir une caractéristique de modulation d'émission relative, et localiser l'anomalie selon la caractéristique de modulation d'émission relative ;

le dispositif de communication comprenant en outre :

une unité de sélection, configurée pour connecter directement les au moins deux unités de traitement de communication qui correspondent à une boucle à surveiller pour mettre en oeuvre la boucle ; l'unité de sélection étant en outre configurée pour recevoir une commande de contrôle de l'unité de surveillance (13) et connecter directement des unités de traitement de communication correspondantes selon la commande de contrôle.

**2.** Dispositif de communication selon la revendication 1, dans lequel l'unité de sélection est un commutateur unipolaire à plusieurs directions, un côté de chaque commutateur unipolaire à plusieurs directions ayant un contact statique, qui est connecté à une extrémité de sortie d'un noeud de communication, l'autre côté ayant de multiples contacts statiques, et chacun des multiples contacts statiques étant connecté à une extrémité d'entrée d'un autre noeud de communication, chaque noeud de communication correspondant respectivement à chacune des unités de traitement de communication.

**3.** Dispositif de communication selon la revendication 2, dans lequel un contact dynamique du commutateur unipolaire à plusieurs directions est configuré pour sélectionner un des multiples contacts statiques et pour connecter le contact statique sélectionné et le contact statique de l'autre côté selon la commande de contrôle de l'unité de surveillance (13).

**4.** Procédé de surveillance de performances d'un dispositif de communication, conçu pour exécuter un test en ligne, qui indique qu'un test est exécuté quand un service est exécuté, consistant à :

collecter, par une unité de collecte, un signal émis par une unité de traitement de communication qui est dans le même dispositif de communication que l'unité de collecte (31) quand l'unité de traitement de communication exécute un service ; et

surveiller, par une unité de surveillance qui est dans le même dispositif de communication que l'unité de collecte, le signal collecté par l'unité de collecte pour localiser une anomalie (32) ;

le dispositif de communication comprenant au moins deux unités de collecte et au moins deux unités de traitement de communication, une première unité de collecte correspondant à une première unité de traitement de communication, et une seconde unité de collecte correspondant à une seconde unité de traitement de communication, et la surveillance du signal collecté par l'unité de collecte pour localiser une anomalie consistant à : comparer des signaux collectés par les au moins deux unités de collecte pour localiser l'anomalie ; et

un signal collecté par la première unité de collecte étant un premier signal, un signal collecté par la seconde unité de collecte étant un second signal, et la comparaison des signaux collectés par les au moins deux unités de collecte pour localiser l'anomalie consistant à :

calculer, par l'unité de surveillance, le premier signal et le second signal afin d'obtenir une caractéristique de modulation d'émission relative, et localiser l'anomalie selon la caractéristique de modulation d'émission relative ;

le procédé consistant en outre à connecter directement, par une unité de sélection comprise dans le dispositif de communication, les au moins deux unités de traitement de communication qui correspondent à une boucle à surveiller pour mettre en oeuvre la boucle ; et consistant en outre à recevoir, par l'unité de sélection, une commande de contrôle de l'unité de surveillance (13) et connecter directement les unités de traitement de communication correspondantes selon la commande de contrôle.

**5.** Procédé selon la revendication 4, dans lequel l'unité de sélection est un commutateur unipolaire à plusieurs directions, un côté de chaque commutateur unipolaire à plusieurs directions ayant un contact statique, qui est connecté à une extrémité de sortie d'un noeud de communication, l'autre côté ayant de multiples contacts statiques, et chacun des multiples contacts statiques étant connecté à une extrémité d'entrée d'un autre noeud de communication, chaque noeud de communication correspondant respectivement à chacune des unités de traitement de communication.

6. Procédé selon la revendication 5, dans lequel un contact dynamique du commutateur unipolaire à plusieurs directions sélectionne un des multiples contacts statiques et connecte le contact statique sélectionné et le contact statique de l'autre côté selon la commande de contrôle de l'unité de surveillance (13).

| Communications processing unit | Collection unit | Monitoring unit |
|---|---|---|

11    12    13

FIG. 1

FIG. 2

A collection unit collects a signal output by a communications processing unit that is in a same communications device with the collection unit — 31

A monitoring unit that is in the same communications device with the collection unit monitors the signal collected by the collection unit to locate a fault — 32

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   WO 2008102313 A2